# EUROPÄISCHE PATENTANMELDUNG

(11) **EP 1 811 134 A1**
(43) Veröffentlichungstag der Anmeldung: **25.07.2007**
(21) Anmeldenummer: 06405028.9
(22) Anmeldetag: 23.01.2006
(51) Int. Cl.: F01D 17/16, F02C 6/12

(54) **Verstellbare Leitvorrichtung**

(71) Anmelder: ABB Turbo Systems AG, 5400 Baden (CH)
(72) Erfinder: Bättig, Josef, 5704 Egliswil (CH); Werro, Jean-Yves, 5417 Untersiggenthal (CH); Kühnel, Janpeter, 8180 Bülach (CH)
(74) Vertreter: ABB Patent Attorneys

(57) **Zusammenfassung**

Die Leitschaufel der verstellbaren Leitvorrichtung einer Abgasturbine ist einteilig als Feingussteil mit dem Schaufelprofil (21), dem Schaufelschaft (22) und dem Verstellhebel (23) hergestellt. Der Verstellhebel ist somit integraler Bestandteil des Schaufelschaftes.

Auf diese Weise kann die Anzahl der zu verbauenden Elemente um die zusätzlichen Verstellhebel reduziert werden. Zudem kann die im Betrieb stark belastete Verbindungszone zwischen dem Verstellhebel und dem Schaufelschaft eliminiert werden.

## Beschreibung

### Technisches Gebiet

Die Erfindung bezieht sich auf das Gebiet der mit Abgasen von Brennkraftmaschinen beaufschlagten Strömungsmaschinen.

Sie betrifft eine verstellbare Leitvorrichtung der Abgasturbine oder des Verdichters eines Abgasturboladers, einen Verdichter und eine Abgasturbine mit einer solchen Leitvorrichtung, einen Abgasturbolader mit einem solchen Verdichter und/ oder mit einer solchen Abgasturbine sowie eine Leitschaufel für eine verstellbare Leitvorrichtung.

### Stand der Technik

Abgasturbolader werden zur Leistungssteigerung von Brennkraftmaschinen eingesetzt. Bei modernen Brennkraftmaschinen wird die Anpassung der Abgasturbolader an variable Betriebsbedingungen zunehmen schwieriger. Eine weit verbreitete Möglichkeit dazu bietet die so genannte variable Turbinen- und/oder Verdichtergeometrie. Bei der variablen Turbinengeometrie werden die Leitschaufeln des Leitapparates stromauf des Turbinenrades entsprechend dem Leistungsbedarf der Turbine mehr oder weniger steil zur Strömung ausgerichtet. Bei der variablen Verdichtergeometrie werden die Diffusorschaufeln stromab des Verdichterrades mehr oder weniger steil zur Strömung ausgerichtet. Die Verstellung der Schaufel erfolgt in der Regel über so genannte Verstellhebel, welche von einem konzentrisch zur Achse des Abgasturboladers angeordneten Verstellring bewegt werden. Bei Radialturbinen, bzw. Radialverdichtern steht die Leitschaufel bzw. die Diffusorschaufel in der Regel parallel zur Wellenachse. Der Schaft der Leit- bzw. Diffusorschaufel wird in einem Gehäuse vorzugsweise 2-fach gelagert und mittels eines Verstellhebels, welcher zwischen den beiden Lagerstellen am Schaufelschaft angreift, verdreht. DE 102 09 172 zeigt einen herkömmlichen verstellbaren Leitapparat bei welchem der Verstellhebel nach der Montage der Schaufel auf den Schaufelschaft aufgeschoben und anschliessend fixiert wird. Die Lagerung des Schaufelschaftes kann auch, wie in EP 1 396 621 beschrieben, mittels einer einzelnen Bohrung ausgeführt werden. Auch hier wird der Verstellhebel nachträglich nach dem Einschieben der Schaufel montiert.

Die präzis gearbeitete Fügestelle zwischen dem aufgeschobenen Verstellhebel und dem Schaufelschaft verursacht einerseits zusätzliche Kosten und reduziert andererseits die Betriebssicherheit des Verstellmechanismus. In der Verbindung treten aufgrund der herstellungs- und montagebedingten Spiele Relativbewegungen auf, welche in der Folge über eine längere Betriebszeit zu Verschleiss führen können.

### Kurze Darstellung der Erfindung

Die Aufgabe der vorliegenden Erfindung besteht darin, eine über eine lange Betriebszeit zuverlässig funktionierende Leitvorrichtung mit verstellbaren Leitschaufeln zu schaffen.

Erfindungsgemäss wird die Leitvorrichtung mit Leitschaufeln ausgestattet, welche stoffschlüssig mit dem Schaufelschaft verbundene Verstellhebel aufweisen.

Auf diese Weise kann die Anzahl der zu verbauenden Elemente um die zusätzlichen Verstellhebel reduziert werden.

Zudem kann die im Betrieb stark belastete Verbindungszone zwischen dem Verstellhebel und dem Schaufelschaft eliminiert werden.

Die Leitschaufel wird vorzugsweise einteilig als Feingussteil mit dem Schaufelprofil, dem Schaufelschaft und dem Verstellhebel hergestellt. Der Verstellhebel ist somit integraler Bestandteil des Schaufelschaftes.

Damit diese Integralschaufel montiert werden kann, ist das Gehäuse, in welchem die Leitschaufeln gelagert sind, zwei- oder mehrteilig ausgebildet, beispielsweise mit einem radial äusseren Umfassungsring und einem radial inneren Gehäuseteil.

Die Gehäusetrennung erfolgt radial im Bereich der Lagerstelle des Schaufelschaftes.

Die erfindungsgemässe Integration des Verstellhebels in den Schaufelschaft erleichtert erheblich die Montage der verstellbaren Leitvorrichtung und bringt eine wesentlich grössere Zuverlässigkeit der Leitvorrichtung im Langzeitbetrieb.

### Kurze Beschreibung der Zeichnungen

Nachfolgend werden verschiedene Ausführungsformen der Erfindung anhand von Zeichnungen detailliert erläutert. Hierbei zeigt
- Fig. 1: einen entlang der Achse geführten Schnitt durch einen Verdichter mit einer erfindungsgemässen Leitvorrichtung,
- Fig. 2: einen vergrössert dargestellten Ausschnitt der Leitvorrichtung nach Fig. 1,
- Fig. 3: eine isometrische Detaildarstellung einer Leitschaufel der Leitvorrichtung nach Fig.1,
- Fig. 4: eine isometrische Darstellung der Leitvorrichtung nach Fig. 1,
- Fig. 5: einen Schnitt durch eine Lagerstelle einer Leitschaufel beim Montieren der Leitschaufel, und
- Fig. 6: einen entlang der Achse geführten Schnitt durch eine Abgasturbine mit einer erfindungsgemässen Leitvorrichtung.

### Weg zur Ausführung der Erfindung

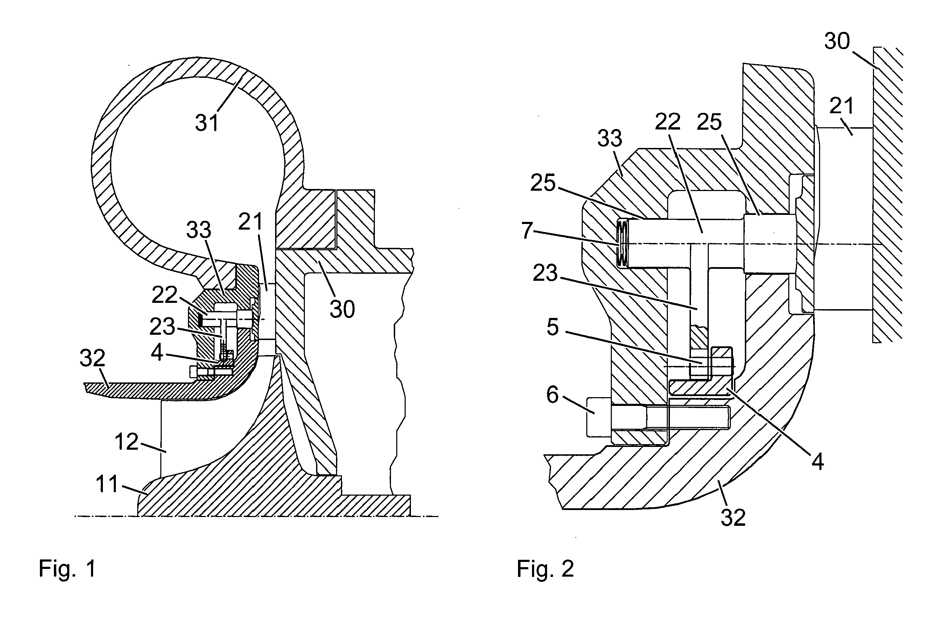

Fig. 1 und Fig. 2 zeigen einen Verdichter, wie er beispielsweise in Abgasturboladern eingesetzt wird, mit einer erfindungsgemässen Leitvorrichtung.

Der dargestellte Radialverdichter umfasst ein Verdichterrad, welches auf einer in einem Lagergehäuse 30 drehbar gelagerten Welle angeordnet ist. Das Verdichterrad weist eine Nabe 11 mit einer Vielzahl von Laufschaufeln 12 auf. Die Verdichterrad-Nabe begrenzt zusammen mit einer Einsatzwand 32 einen Strömungskanal. In Strömungsrichtung stromab des Verdichterrades ist der Strömungskanal durch das Lagergehäuse und das Verdichteraustrittsgehäuse 31 begrenzt. Im Bereich des Diffusors, stromab des Verdichterrades, ist eine verstellbare Diffusor-Leitvorrichtung angeordnet.

Diese Leitvorrichtung umfasst eine Vielzahl verstellbarer Leitschaufeln 21, welche jeweils um einen drehbar gelagerten Schaufelschaft 22 rotierbar sind. Leitschaufel und Schaufelschaft können form-, kraft- oder stoffschlüssig miteinander verbunden sein.

Der Schaufelschaft ist in dem Gehäuse drehbar gelagert. Zum Antrieb des Schaufelschafts ist ein Verstellhebel 23 vorgesehen, welcher Kraft von einem Verstellring 4 auf den Schaufelschaft überträgt. Der Verstellhebel ist erfindungsgemäss stoffschlüssig mit dem Schaufelschaft verbunden. Der Verstellhebel ist dabei beispielsweise mit dem Schaufelschaft als ein einziges Bauteil gegossen und/ oder gefräst.

In einer bevorzugten Ausführungsform der Erfindung sind Leitschaufel 21, Schaufelschaft 22 und Verstellhebel 23 stoffschlüssig miteinander verbunden. Beispielsweise dadurch, dass Leitschaufel, Schaufelschaft und Verstellhebel als ein einziges Bauteil gegossen und/ oder gefräst werden.

Das den Strömungskanal im Bereich der Leitvorrichtung begrenzende Gehäuse ist in radialer Richtung zweigeteilt. Es umfasst neben der Einsatzwand 32 einen radial ausserhalb der Einsatzwand angeordneten Umfassungsring 33. Im Umfassungsring und in der Einsatzwand sind die Lagerstellen 25 zur Lagerung des Schaufelschaftes angeordnet, wie dies der vergrösserten Darstellung in Fig. 2 entnommen werden kann. Anstelle der dargestellten Ausführungsform mit zwei, relativ kurzen Lagerstellen beidseits des Verstellhebels 23 ist auch eine Ausführungsform mit nur einer Lagerstelle des Schaufelschaftes denkbar. In der dargestellten Ausführungsform wird die Laufschaufeln mittels einer auf das Ende des Schaufelschaftes wirkende Feder 7 gegen die gegenüberliegende Gehäusewand des Lagergehäuses 30 gedrückt.

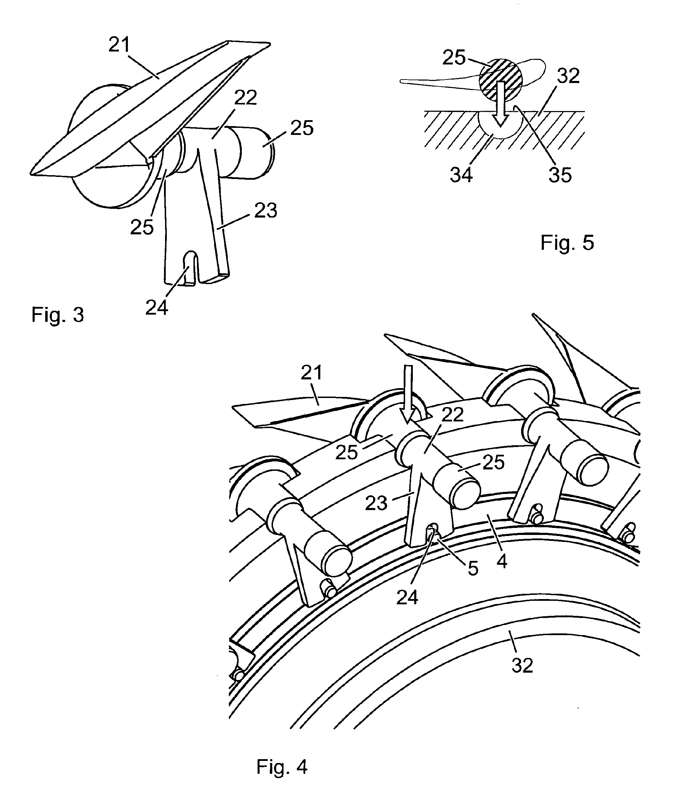

Fig. 3 zeigt eine isometrische Darstellung der erfindungsgemäss ausgebildeten Leitschaufel. Die eigentliche Leitschaufel 21 ist im Wesentlichen senkrecht zur Achse des Schaufelschaftes 25 angeordnet. Zwischen den beiden Lagerstellen 25 des Schaufelschaftes ist der Verstellhebel 23 angeordnet. Dieser ist in der dargestellten Ausführungsform gerade ausgebildet und steht ebenfalls im Wesentlichen senkrecht zur Achse des Schaufelschaftes. Alternativ könnte der Verstellhebel eine gebogene Form aufweisen oder etwa in einem leichten Winkel zur Achse des Schaufelschaftes geneigt angeordnet sein.

In das freie Ende des Verstellhebels ist eine längliche Nut 24 eingelassen, in welcher ein Mitnehmerbolzen eines Verstellrings zum Antrieb des Verstellhebels aufgenommen werden kann. Die längliche Nut kann auch als Langloch ausgebildet sein, in welchem sich der Mitnehmerbolzen hin und her bewegen kann, welches aber verhindert, dass der Mitnehmerbolzen gänzlich aus der Nut gezogen wird.

Aus Fig. 4 wird ersichtlich, wie der Antrieb der Verstellhebel über den konzentrisch zur Laderachse angeordneten Verstellring 4 erfolgt. Der Verstellring weist jeweils pro Verstellhebel 23 einen zylindrischen Mitnehmerbolzen 5 auf. Wird der Verstellring in Umfangsrichtung bewegt, wirken die Mitnehmerbolzen in den Nuten 24 auf die Verstellhebel und drehen diese um die Achsen der drehbar gelagerten Schaufelschäfte 22. Die freien Enden der Verstellhebel sind abgerundet, damit sie beim Bewegen des Verstellrings nicht verklemmen. In dieser Darstellung ist der Umfassungsring nicht auf der Einsatzwand 32 aufgesetzt. Die schaufelnahen Lagerstellen des Schaufelschaftes liegen in Lageröffnungen, welche etwa je zur Hälfte in die Einsatzwand und in den in axialer Richtung über die Einsatzwand schiebbaren Umfassungsring eingelassen sind.

Macht der Anteil der Lageröffnung 34 in der Einsatzwand 33, wie in Fig. 5 dargestellt, mehr als die Hälfte der runden Öffnung aus, ergibt sich beim Einsetzen der Schaufelschäfte 22 in Pfeilrichtung ein geringfügiger Widerstand, welcher überwunden werden muss, bevor der Schaufelschaft in der Lageröffnung einschnappt. Der geringfügige Widerstand ergibt sich daraus, dass die Breite der Einführöffnung 35 geringfügig kleiner als der Durchmesser des Schaufelschaftes 22 ist. Nach dem Einsetzen lässt sich der Schaufelschaft frei drehen, fällt jedoch nicht ohne einen weiteren, geringfügigen Kraftaufwand in radialer Richtung aus der Lageröffnung. Dies erleichtert die Montage der Leitvorrichtung auf der Einsatzwand.

Weist der Schaufelschaft einen Bereich mit gegenüber der Lagerstelle 25 verringertem Durchmesser auf, kann der Schaufelschaft mit dem Bereich mit verringertem Durchmesser in die Lageröffnung eingeführt und anschliessend in axialer Richtung in die definitive Position verschoben werden.

Bevor die Leitschaufeln mit den Schaufelschäften in die dafür vorgesehenen Lageröffnungen der Einsatzwand eingesetzt werden, wird der Verstellring 4 in eine dafür vorgesehene Ausnehmung der Einsatzwand gelegt. Sind anschliessend alle Leitschaufeln eingesetzt, kann der Umfassungsring 33 in radialer Richtung über Einsatzwand geschoben werden, so dass die freien Enden der Schaufelschäfte 22 in die dafür vorgesehenen und mit den Federelementen 7 bestückten Öffnungen in dem Umfassungsring eingeführt werden. Der Verstellring 4 ist vorteilhafterweise axial geführt, beispielsweise über entsprechende axiaie Anschläge an der Einsatzwand und/oder am Umfassungsring. Der Umfassungsring wird schliesslich mittels Befestigungsmittel 6 an der Einsatzwand befestigt. Die verstellbare Leitvorrichtung lässt sich sodann mitsamt der Einsatzwand in der zentralen Öffnung des Verdichtergehäuses 31 einbauen.

Der Umfassungsring kann alternativ auch in Umfangsrichtung mehrteilig ausgebildet sein. Auf diese Weise können die mehreren Teile des Umfassungsrings in radialer Richtung von Aussen auf die Einsatzwand aufgesetzt werden. Dies ermöglicht weiteren konstruktiven Freiraum bei der Gestaltung der verstellbaren Leitvorrichtung.

Zur Verbesserung der Betriebszuverlässigkeit der Verstellhebel-Verstellring-Ankopplung kann der an sich zylindrisch ausgebildete und in einer kreisrunden Öffnung im Verstellring frei rotierbare Mitnehmerbolzen mit zwei planen Gleitflächen ausgebildet sein, welche an entsprechend planen Gleitflächen der Nut am freien Ende der Verstellhebel aufliegen.

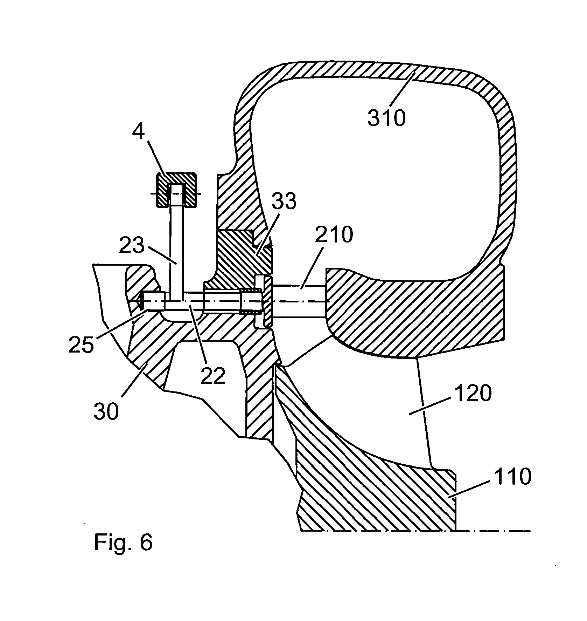

Fig. 6 zeigt die erfindungsgemässe Leitvorrichtung in einer Abgasturbine. Die dargestellte Radialturbine umfasst ein Turbinenrad, welches auf einer in einem Lagergehäuse 30 drehbar gelagerten Welle angeordnet ist. Das Turbinenrad weist eine Nabe 110 mit einer Vielzahl von Laufschaufeln 120 auf. Die Turbinenrad-Nabe begrenzt zusammen mit dem Turbinengehäuse 310 einen Strömungskanal. In Strömungsrichtung stromauf des Turbinenrades ist der Strömungskanal durch das Lagergehäuse und das Turbinengehäuse 310 begrenzt. In diesem Bereich ist eine verstellbare Leitvorrichtung angeordnet.

Die Leitvorrichtung umfasst ebenfalls mehrere verstellbare Leitschaufeln 210, welche jeweils um einen drehbar gelagerten Schaufelschaft 22 rotierbar sind. Leitschaufel und Schaufelschaft können form-, kraft- oder stoffschlüssig miteinander verbunden sein.

Der Schaufelschaft ist in dem Lagergehäuse drehbar gelagert. Zum Antrieb des Schaufelschafts ist wiederum ein erfindungsgemäss stoffschlüssig mit dem Schaufelschaft verbundener Verstellhebel 23 vorgesehen, welcher Kraft von dem Verstellring 4 auf den Schaufelschaft überträgt. Der Verstellhebel ist dabei beispielsweise mit dem Schaufelschaft als ein einziges Bauteil gegossen und/ oder gefräst.

In einer bevorzugten Ausführungsform der Erfindung sind Leitschaufel 210, Schaufelschaft 22 und Verstellhebel 23 stoffschlüssig miteinander verbunden. Beispielsweise dadurch, dass Leitschaufel, Schaufelschaft und Verstellhebel als ein einziges Bauteil gegossen und/ oder gefräst werden.

Bei der Montage der Leitschaufeln der turbinenseitigen verstellbaren Leitvorrichtung in der dargestellten Ausführungsform werden die Leitschaufeln mit den Schaufelschäften in dafür vorgesehenen Lageröffnungen in dem radial äusseren Umfassungsring 33 eingesetzt. Durch verengte Einführöffnung und entsprechendes Einschnappen beim Einsetzen kann auch hier ungewolltes Herausfallen der Schaufelschäfte aus den Lageröffnungen verhindert werden. Der Verstellring 4, die Einheit aus Leitschaufeln 210, Schaufelschaft 22 und Verstellhebel 23 sowie der Umfassungsring 33 lassen sich sodann als eine Baugruppe in axialer Richtung auf das Lagergehäuse 30 aufschieben.

Die erfindungsgemässen Leitvorrichtungen können sowohl in Verdichter und/ oder Turbine eines Abgasturboladers zur Aufladung von Zwei- oder Viertakt-Verbrennungsmotoren eingesetzt werden, als auch in Turbinen bei mit Abgasen einer Brennkraftmaschine betriebenen Nutzturbinen.

### Bezugszeichenliste

- 11: Verdichterrad-Nabe
- 110: Turbinenrad-Nabe
- 12: Verdichter-Laufschaufeln
- 120: Turbinen-Laufschaufel
- 21: Leitschaufel (Diffusorschaufel)
- 210: Leitschaufel (Turbine)
- 22: Schaufelschaft
- 23: Verstellhebel
- 24: Nut
- 25: Lagerstellen
- 30: Lagergehäuse
- 31: Verdichtergehäuse
- 310: Turbinengehäuse
- 32: Einsatzwand
- 33: Umfassungsring
- 34: Lageröffnung
- 35: Einführöffnung
- 4: Verstellring
- 5: Mitnehmerbolzen
- 6: Befestigungselement
- 7: Federelement

## Patentansprüche

1. Leitvorrichtung mit verstellbaren Leitschaufeln (21, 210), welche Leitschaufeln jeweils mit einem drehbar gelagerten Schaufelschaft (22) verbunden und mit einem mit dem Schaufelschaft verbundenen und auf den Schaufelschaft wirkenden Verstellhebel (23) um den Schaufelschaft drehbar sind, **dadurch gekennzeichnet, dass** der Schaufelschaft (22) und der Verstellhebel (23) stoffschlüssig miteinander verbunden sind.

2. Leitvorrichtung nach Anspruch 1, **dadurch gekennzeichnet, dass** die Leitschaufel (21, 210), der Schaufelschaft (22) und der Verstellhebel (23) stoffschlüssig miteinander verbunden sind.

3. Leitvorrichtung nach einem der Ansprüche 1 oder 2, **dadurch gekennzeichnet, dass** der Schaufelschaft (22) in einem Gehäuse gelagert ist, wobei das Gehäuse einen radial inneren Gehäuseteil (30, 32) und einen radial äusseren Umfassungsring (33) umfasst.

4. Leitvorrichtung nach Anspruch 3, **dadurch gekennzeichnet, dass** zur Montage der Leitvorrichtung der äussere Umfassungsring (33) in axialer Richtung über die im radial inneren Gehäuseteil (32) angeordneten Leitschaufeln (21) schiebbar ist.

5. Leitvorrichtung nach Anspruch 3, **dadurch gekennzeichnet, dass** zur Montage der Leitvorrichtung der äussere Umfassungsring (33) zusammen mit den im äusseren Umfassungsring angeordneten Leitschaufeln (210) in axialer Richtung über das radial inneren Gehäuseteil (32) schiebbar ist.

6. Leitvorrichtung nach Anspruch 3, **dadurch gekennzeichnet, dass** der äussere Umfassungsring (33) in Umfangsrichtung mehrteilig ausgebildet ist.

7. Leitvorrichtung nach einem der vorangehenden Ansprüche, **dadurch gekennzeichnet, dass** der Schaufelschaft (22) zumindest eine Lagerstelle (25) zur Lagerung in einem Gehäuse (30, 32, 33) aufweist, und dass die Lagerstelle zwischen dem Verstellhebel (23) und der Leitschaufel (21, 210) angeordnet ist.

8. Leitvorrichtung nach einem der vorangehenden Ansprüche, **dadurch gekennzeichnet, dass** der Schaufelschaft (22) zumindest eine Lagerstelle (25) zur Lagerung in einem Gehäuse (30, 32, 33) aufweist, dass das Gehäuse eine Lageröffnung (34) aufweist, in welcher die Lagerstelle (25) drehbar gelagert ist, dass der Schaufelschaft einen Bereich mit verringertem Durchmesser aufweist, und dass der Schaufelschaft mit dem Bereich mit verringertem Durchmesser in radialer Richtung durch eine Einsetzöffnung (35) in der Lageröffnung in die Lageröffnung (34) einsetzbar und anschliessend in axialer Richtung verschiebbar ist.

9. Leitvorrichtung nach einem der vorangehenden Ansprüche, **dadurch gekennzeichnet, dass** der Schaufelschaft (22) zumindest eine Lagerstelle (25) zur Lagerung in einem Gehäuse (30, 32, 33) aufweist, dass das Gehäuse eine Lageröffnung (34) aufweist, in welcher die Lagerstelle (25) drehbar gelagert ist, und dass der Schaufelschaft in radialer Richtung durch eine Einsetzöffnung (35) in der Lageröffnung in die Lageröffnung (34) einsetzbar ist, wobei die Einsetzöffnung derart eng bemessen ist, dass der Schaufelschaft (22) beim Einsetzen unter Überwindung eines Widerstandes in die Lageröffnung (34) einschnappt.

10. Verdichter mit einen Diffusor mit verstellbaren Diffusorschaufeln, **dadurch gekennzeichnet, dass** der Diffusor eine Leitvorrichtung nach einem der Ansprüche 1 bis 9 umfasst.

11. Abgasturbine, **gekennzeichnet durch** eine Leitvorrichtung nach einem der Ansprüche 1 bis 9.

12. Abgasturbolader, **gekennzeichnet durch** einen Verdichter nach Anspruch 10 und/oder **durch** eine Abgasturbine nach Anspruch 11.

13. Leitschaufeln (21, 210) für eine verstellbare Leitvorrichtung, mit einem Schaufelschaft (22), **dadurch gekennzeichnet, dass** an dem Schaufelschaft stoffschlüssig ein Verstellhebel (23) zum Drehen der Leitschaufel um den Schaufelschaft befestigt ist.
